# EUROPEAN PATENT SPECIFICATION

(11) **EP 0 752 448 B1**
(45) Date of publication and mention of the grant of the patent: **09.06.2004**
(21) Application number: 96110192.0
(22) Date of filing: 24.06.1996
(51) Int. Cl.: C08L 69/00, C08L 67/02, C08L 77/00, C08L 101/00, C08L 83/04

(54) **Impact modified thermoplastic molding composition containing a silicone rubber powder**
Schlagzäh modifizierte, ein Siliconkautschukpulver enthaltende thermoplastische Formmassen
Composition thermoplastique de moulage résistante aux chocs contenant du caoutchouc de silicone en poudre

(30) Priority: 06.07.1995 US 498935; 06.07.1995 US 498828; 06.07.1995 US 498939; 06.07.1995 US 498737; 13.07.1995 US 501911
(43) Date of publication of application: 08.01.1997
(60) Divisional application: 04004815.9
(73) Proprietor: Bayer Corporation, Pittsburgh, PA 15205-9741 (US)
(72) Inventor: Chung, James Y.J., Wexford, PA 15090 (US); Mason, James P., McKees Rocks, PA 15136 (US); White, Roger J., Washington, PA 15301 (US); DiBernardo, James A., North Braddock, PA 15104 (US)
(74) Representative: Klimiuk-Japadita, Meike

(56) References cited:
- EP-A- 0 006 521
- EP-A- 0 260 004
- EP-A- 0 505 869
- EP-A- 0 541 988
- EP-A- 0 543 597
- EP-A- 0 596 734
- WO-A-86/03213
- BE-A- 622 377
- DE-A- 3 314 355
- US-A- 5 391 594
- US-I4- T 941 003
- DATABASE WPI Section Ch, Week 7604 Derwent Publications Ltd., London, GB; Class A23, AN 76-06262X XP002080678 & JP 50 096650 A (UNITIKA LTD) , 31 July 1975
- DATABASE WPI Section Ch, Week 9627 Derwent Publications Ltd., London, GB; Class A26, AN 96-263855 XP002080679 & JP 08 109262 A (DOW CORNING TORAY SILICONE), 30 April 1996

## Description

The invention concerns a thermoplastic molding composition comprising nylon 6, nylon 66, and copolymers of nylon 6 and nylon 66 and silicone rubber powder.

The invention is based on the surprising and unexpected finding that the impact performance of a thermoplastic composition containing the a.m. thermoplastic polymers is improved upon incorporation therewith of a particular silicone rubber powder. The silicone rubber powder, is characterized in that it contains a mixture of (a) a polydiorganosiloxane and (b) silica.

The thermoplastic polymers are well known and are readily available in commerce. While the impact resistance of polycarbonate makes this resin the material of choice in a variety of demanding applications, attempts at improving this property continue. While the chemical resistance of polyester is well recognized and is the basis for the wide applicability of the resin, its low impact resistance and brittle failure limits the utility of the resin. The art has long recognized and been concerned with improving the impact strength of polyamides. A variety of additives have been suggested and added to polyamides. The literature includes a large number of patents directed to this subject. Thermoplastic polyester resins are also well known and are readily available in commerce. Also known are blends of polycarbonate and thermoplastic polyester.

Of particular relevance in the present context is a paper by R. Buch et al "Silicone-Based Additives for Thermoplastic Resins Providing Improved Impact Strength, Processing and Fire Retardant Synergy". This prior art paper (Dow Coming Corporation) disclosed certain silicone powder resin modifier products termed RM 4-7081 and RM 4-7051 to be useful in reducing the rate of heat release and the evolution rates of smoke and carbon monoxide of burning plastics, including polycarbonate. The relevant properties of compositions containing 99 and 95% polycarbonate, the balance in each composition being RM 4-7081, are reported. Also disclosed is the impact strength improvement for engineering resins such as polyphenylene ether (PPE) and PPS. Improved impact strength of polycarbonate compositions is not reported.

Also related is Canadian Patent Application 2,083,014 which disclosed the silicone rubber powder of the present invention as a component in a composition containing poly(phenylene ether) resin.

Polycarbonate molding compositions which contain additive amounts of organosiloxane compounds are known: JP 5,262,960 is said to disclose a low viscosity polycarbonate resin composition which contains organo siloxane and a catalyst. The composition is said to exhibit lower melt viscosity and improved fluidity and moldability without loss of mechanical properties; JP 5,086,278 is considered to disclose an organosiloxane compound and a catalyst as additives to a polycarbonate resin. EP 505,869 disclosed a polycarbonate composition containing a siloxane compound, characterized in its high dimensional stability. Polycarbonate compositions containing a cyclosiloxane compound were disclosed in U.S. Patent 3,751,519 to have good release properties. A thermal oxidative stabilized polycarbonate composition containing a hydrocarbonoxy siloxane compound has been disclosed in U.S. Patent 4,197,384. U.S. Patent 5,322,882 disclosed a composition having improved impact strength containing a polycarbonate/polyorganosiloxane copolymer.

Many of the additives for polyamides are elastomeric, for instance, U.S. Patent 3,668,274 disclosed improved impact strength by adding a core/shell polymer containing (a) a core made of a cross linked elastomeric phase and (b) a shell made of a rigid thermoplastic phase which contains amine-reactive moieties. An impact resistant polyamide composition containing a graft product of polybutadiene as a graft substrate and a mixture of acrylate and acrylonitrile and or acrylamide monomers grafted thereon was disclosed in U.S. Patent 4,221,879. Also relevant in this context is U.S. Patent 4,167,505; 4,174,358 and 4,584,344.

It has now been discovered that certain silicone rubber powders, preferably produced in accordance with the procedure disclosed in U.S. Patent 5,153,238 which is incorporated herein by reference, are useful as impact modifiers in thermoplastic molding compositions containing nylon 6, nylon 66, and copolymers of nylon 6 and nylon 66.

The inventive compositions contain about 1 to 25 percent, preferably 3 to 15 percent relative to the weight of the composition, of the silicone rubber powder.

The nylon 6, nylon 66, and copolymers of nylon 6 and nylon 66 matrix resin which is suitable for the preparation of the toughened composition of the present invention is well known in the art and is readily available in commerce. Embraced within the scope of the term are semi-crystalline and amorphous polymeric resins having a number average molecular weight (determined by end-group analysis) of about 5,000 to 30,000 commonly referred to as nylons. Preferably, the molecular weight is in the range of about 8,000 to 20,000. Preferably the polymeric resins are linear and have a melting temperature in excess of 200°C.

The silicone rubber powder of the invention has an average particle size of about 1 to 1000 microns and contains (i) 100 parts by weight (pbw) of a polydiorganosiloxane and (ii) about 10 to 80 pbw, preferably, about 20 to 50 pbw of a finely divided silica filler.

The polydiorganosiloxane which is characterized in that its viscosity at 25°C is about 10⁶ to 10⁹ m Pa·s is a (co)polymeric resin having siloxane structural units represented by the general formula 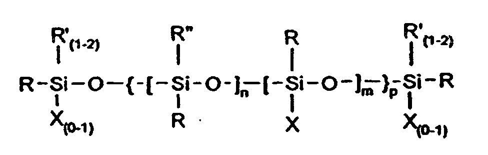 wherein R, R' and R" independently denote hydrogen, C₁₋₁₀-alkyl, alkenyl, cycloalkyl radicals or aryl groups, and where p is about 1000 to 8000, preferably about 3000 to 6000 and where the relative weight proportions of n and m are 98.5 to 100:0 to 1.5, preferably 99:1, and where

X denotes a member selected from the group consisting of 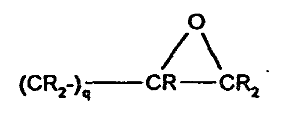 and 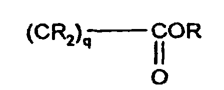 where R denotes hydrogen, C₁₋₁₀-alkyl, alkenyl, cycloalkyl radicals or aryl groups and where q is 1 to 10.

The organic groups of the polydiorganosiloxane, which may optionally be halogenated, are preferably lower alkyl radicals containing 1 to 4 carbon atoms, phenyl and halogen substituted alkyl radicals. Examples include resins containing dimethylsiloxy units, phenylmethyl-siloxy units and dimethylsiloxy units and diphenyl siloxy units. Most preferably, the polydiorganosiloxane contains vinyl group(s) or epoxy group(s) at its chain termination(s) and/or along its main chain. The methods for the preparation of suitable polydiorganosiloxane are well known; a typical method comprises the acid- or base-catalyzed polymerization of cyclic diorganosiloxanes.

The silica filler required in the silicone rubber powder is a finely divided silica selected from among fumed silica and precipitated silica or silica gel. These are well known forms of silica and are readily available in commerce. The suitable silica is characterized in that its surface area is at least 50 m²/g, preferably 50 to 900 m²/g.

An additional embodiment entails use of treated silica which contains sites bonded to groups X as defined above; the manufacture of treated silica, typically by reacting the silanol groups on the silica surface with about 1 to 2% by weight of an organic alkyl halide compound or an organosilicon halide compound, is known in the art.

Among the suitable compounds, mention may be made of low molecular weight liquid hydroxy- or alkoxy-terminated polydiorgano-siloxanes, hexaorganosiloxanes and hexaorganosilazanes.

The procedure for the preparation of the silicone rubber powder has been described in detail in U.S. Patent 5,153,238, the specification of which is incorporated herein by reference. Suitable silicone rubber powder is available in commerce from Dow Coming Corporation under the trademark RM 4-7051 and RM 4-7081.

The preparation of the composition of the invention is carried out following conventional procedures and by use of conventional means such as single, preferably twin screw extruders. Conventional thermoplastic processes are suitable in molding useful articles from the inventive composition.

Conventional additives may be incorporated in the composition of the invention in the usual quantities. Mention may be made of a thermal stabilizer, a mold release agent, a pigment, a flame retarding agent, a uv stabilizer, a hydrolysis stabilizer, a gamma radiation stabilizer and a plasticizer for polycarbonate compositions, as well as fillers and reinforcing agents such as glass fibers.

### Examples:

Compositions in accordance with the invention have been prepared following well-known procedures and their properties determined as described below:

The compositions according to examples 1 to 3 have been prepared following well-known procedures and their properties determined as described below: the polyamide resin was nylon 6, available from Bayer Corporation as Durethan B40K resin; the silicone rubber powder was Dow Coming's RM 4-7051.

All the compositions were produced by extruding in a twin screw extruder and injection molded (3 oz. Newbury).

Since the impact strength of polyamide is highly dependent on its moisture content, the impact strength was determined on specimens as molded and on conditioned samples. The impact strength of the as molded specimens was determined 24 hours after molding; during the 24 hours period, the specimens were held at 50% relative humidity at 23°C. The notched Izod impact strength of the conditioned specimens was determined 14 days after molding. During the 14 days period the specimens were first immersed in deionized water for seven days at 23°C and then removed from the water and sealed in an air tight bag for seven days at 23°C. The impact strength and moisture absorption of the samples were determined using ASTM D256 and D570 respectively.

A summary of the results is presented below. Instrumented impact measured as total energy, dart impact, speed of the dart 15 miles per hour, was determined in accordance with ASTM D 3763. The unnotched values of the composition showed no advantage for using the silicon rubber powder.

**Table 1**

| **Example** | 1 | 2 | 3 |
|---|---|---|---|
| Polyamide, wt. % | 100 | 97 | 90 |
| Silicone rubber powder wt. % | 0 | 3 | 10 |
| Water Absorption, as molded | 1 | 1 | 1 |
| Water absorption, conditioned | 9 | 9 | 9 |
| Dart Impact, ft.lb at 23°C | 8.4 | 2.7 | 2.7 |
| Impact strength, ft. lb./in. notched Izod 1/8" | | | |
| as molded | 1 | 1.4 | 2.5 |
| conditioned | 1.9 | 3.2 | 13.7 |

## Claims

1. A thermoplastic molding composition comprising
A) nylon 6, nylon 66 or copolymers of nylon 6 and nylon 66 having a number average molecular weight of 5,000 to 30,000 determined by end-group analysis,
B) a silicone rubber powder,
wherein said powder is present in the composition in an amount of 1 to 25% by weight, relative to the weight of the composition, said silicone rubber powder having an average particle size of 1 to 1000 microns and containing
(i) 100 pbw of a polydiorganosiloxane having a viscosity at 25°C is 10⁶ to 10⁹ mPas and siloxane structural units represented by the general formula 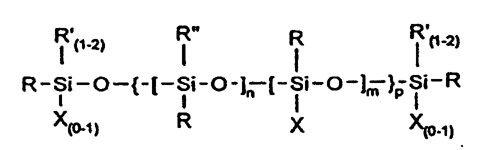 wherein R, R' and R" independently denote a hydrogen atom, C₁₋₁₀-alkyl, alkenyl, cycloalkyl radicals or aryl groups, and where p is 1000 to 8000 and where the relative weight proportions of n and m is 98.5 to 100:0 to 1.5, and where
X denotes a member selected from the group consisting of 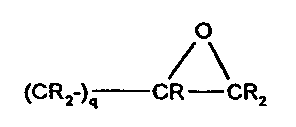 and 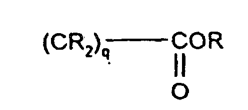 where R denotes hydrogen, C₁₋₁₀-alkyl, alkenyl, cycloalkyl radicals or aryl groups and where q is 1 to 10, and
(ii) 10 to 80 pbw of a finely divided silica selected from among fumed silica, precipitated silica and silica gel having a surface area of at least 50 m²/g.

2. The composition of Claim 1 wherein said hydrocarbon radical is selected from the group consisting of C₁₋₁₀-alkyl radicals; alkenyl radicals; cycloalkyl radicals; and aromatic hydrocarbon radicals.

3. The composition of Claim 2 wherein said hydrocarbon radical is a lower alkyl radical containing 1 to 4 carbon atoms or a phenyl radical.

4. The composition of Claim 1 wherein said silica has a surface area of 50 to 900 m²/g.

5. The composition of Claim 1 wherein said p is 5000 to 6000.

6. The composition of Claim 1 wherein the relative weight proportions of n and m is 99:1.

7. The composition of Claim 1 wherein said silica contains sites bonded to said X.

8. The composition of Claim 1 further containing at least one member selected from the group consisting of a thermal stabilizer, a mold release agent, a pigment, a flame retarding agent, a uv stabilizer, a hydrolysis stabilizer, a gamma radiation stabilizer, a plasticizer, a filler and a reinforcing agent.

## Patentansprüche

1. Thermoplastische Formmasse, umfassend
A) Nylon 6, Nylon 66 oder Copolymere von Nylon 6 und Nylon 66 mit einem Zahlenmittel der Molmasse von 5000 bis 30 000, das durch Endgruppenanalayse bestimmt wurde,
B) ein Siliconkautschuk-Pulver,
wobei das Pulver in der Zusammensetzung in einer Menge von 1 - 25 Gew.-%, bezogen auf das Gewicht der Zusammensetzung vorliegt, das Siliconkautschuk-Pulver eine durchschnittliche Teilchengröße von 1 - 1000 µm hat und folgendes enthält:
(i) 100 Gewichtsteile eines Polydiorganosiloxans mit einer Viskosität bei 25 °C von 10⁶ bis 10⁹ mPa·s und Siloxan-Struktureinheiten, die durch die allgemeine Formel: 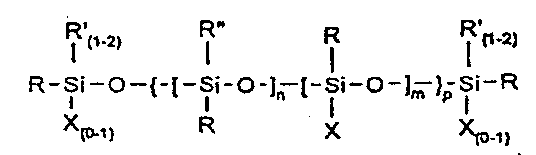 dargestellt werden, in der R, R' und R" unabhängig voneinander ein Wasserstoffatom, C₁₋₁₀-Alkyl-, Alkenyl-, Cycloalkyl-Reste oder Arylgruppen bezeichnen und p 1000 bis 8000 ist, und wobei die relativen Gewichtsanteile von n und m 98,5 bis 100:0 bis 1,5 sind, und wobei
X einen Rest bezeichnet, der aus der Gruppe ausgewählt ist, bestehend aus: 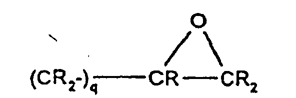 und 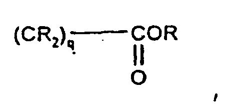 wobei R Wasserstoff, C₁₋₁₀-Alkyl-, Alkenyl-, Cycloalkyl-Reste oder Arylgruppen bezeichnet und q 1 bis 10 ist,
und
(ii) 10 bis 80 Gewichtsteile fein zerteiltes Siliciumdioxid, das aus Quarzstaub, ausgefälltem Siliciumdioxid und Silicagel mit einer spezifischen Oberfläche von wenigstens 50 m²/g ausgewählt ist.

2. Zusammensetzung gemäß Anspruch 1, in der der Kohlenwasserstoff-Rest aus der Gruppe ausgewählt ist, bestehend aus, C₁₋₁₀-Alkyl-Resten, Alkenyl-Resten, Cycloalkyl-Resten und aromatischen Kohlenwasserstoff-Resten.

3. Zusammensetzung gemäß Anspruch 2, in der der Kohlenwasserstoff-Rest ein Niederalkyl-Rest, der 1 bis 4 Kohlenstoffatome enthält, oder ein PhenylRest ist.

4. Zusammensetzung gemäß Anspruch 1, in der das Siliciumdioxid eine spezifische Oberfläche von 50 - 900 m²/g hat.

5. Zusammensetzung gemäß Anspruch 1, in der p 5000 bis 6000 ist.

6. Zusammensetzung gemäß Anspruch 1, in der die relativen Gewichtsanteile von n und m 99:1 sind.

7. Zusammensetzung gemäß Anspruch 1, in der das Siliciumdioxid Stellen enthält, die mit X verbunden sind.

8. Zusammensetzung gemäß Anspruch 1, die weiterhin wenigstens eine Substanz enthält, die aus der Gruppe ausgewählt ist, bestehend aus einem Wärmestabilisator, einem Formentrennmittel, einem Pigment, einem Flammverzögerungsmittel, einem UV-Stabilisator, einem Hydrolyse-Stabilisator, einem Stabilisator gegenüber y-Strahlung, einem Weichmacher, einem Füllstoff und einem Verstärkungsmittel.

## Revendications

1. Composition thermoplastique de moulage comprenant
A) du Nylon 6, du Nylon 66 ou des copolymères de Nylon 6 et de Nylon 66 ayant un poids moléculaire moyen en nombre de 5000 à 30 000 déterminé par analyse des groupements terminaux ;
B) un caoutchouc de silicone en poudre,
dans laquelle ladite poudre est présente dans la composition dans une quantité de 1 à 25% en poids, par rapport au poids de la composition, ladite poudre de caoutchouc de silicone ayant une taille moyenne de particule de 1 à 1000 microns et contenant
(i) 100 parties en poids d'un polydiorganosiloxane ayant une viscosité à 25°C de 10⁶ à 10⁹ mPa.s et des unités de structure de siloxane représentées par la formule générale 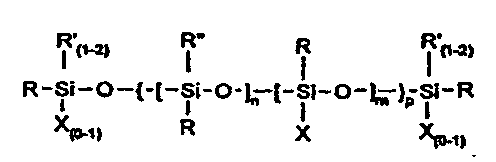 dans laquelle R, R' et R" indépendamment désignent un atome d'hydrogène, des radicaux alkyle en C₁-C₁₀, alcényle, cycloalkyle ou des groupements aryle et où p est 1000 à 8000 et où les proportions relatives en poids de n et m sont de 98,5 à 100:0 à 1,5, et où
X désigne un membre choisi parmi le groupe constitué de 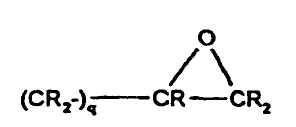 et 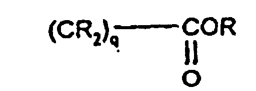 où R désigne un hydrogène, des radicaux alkyle en C₁₋₁₀, alcényle, cycloalkyle ou des groupements aryle et où q est 1 à 10,
et
(ii) 10 à 80 parties en poids d'une silice finement divisée choisie parmi la silice fumée, la silice précipitée et du gel de silice ayant une aire spécifique d'au moins 50 m²/g.

2. Composition selon la revendication 1 dans laquelle ledit radical hydrocarboné est choisi parmi le groupe constitué de radicaux alkyle en C₁-C₁₀ ; de radicaux alcényle ; de radicaux cycloalkyle ; et de radicaux aromatiques hydrocarbonés.

3. Composition selon la revendication 2 dans laquelle ledit radical hydrocarboné est un radical alkyle inférieur contenant 1 à 4 atomes de carbone ou un radical phényle.

4. Composition selon la revendication 1 dans laquelle ladite silice a une surface spécifique de 50 à 900 m²/g.

5. Composition selon la revendication 1 dans laquelle ledit p est 5000 à 6000.

6. Composition selon la revendication 1 dans laquelle les proportions pondérales relatives de n et m sont de 99:1.

7. Composition selon la revendication 1 dans laquelle ladite silice contient des sites liés audit X.

8. Composition selon la revendication 1 contenant en plus au moins un membre choisi parmi le groupe constitué d'un stabilisant thermique, d'un agent de démoulage, d'un pigment, d'un agent d'ignifugation, d'un stabilisant aux UV, d'un stabilisant à l'hydrolyse, d'un stabilisant aux radiations gamma, d'un plastifiant, d'une charge et d'un agent renforçant.
